# EUROPEAN PATENT APPLICATION

(11) **EP 2 730 188 A1**
(43) Date of publication of application: **14.05.2014**
(21) Application number: 11869287.0
(22) Date of filing: 06.12.2011
(51) Int. Cl.: A45B 25/02

(54) **MIDDLE DISK OF SUNSHADE**

(30) Priority: 08.07.2011 CN 201120241154 U
(71) Applicant: Activa Leisure Inc., Ningbo, Zhejiang 315014 (CN)
(72) Inventor: MA, Oliver Joen-an, Yinzhou, Ningbo, Zhejiang 315104 (CN)
(74) Representative: Hasler, Erich
(86) International application number: PCT/CN2011/083588
(87) International publication number: WO 2013/007081

(57) **Abstract**

The present invention relates to a middle disk of sunshade umbrellas, which comprises a first and a second end part which are connected with each other. The first end part is an insertion portion for a short rib and the insertion portion for a short rib is provided with fixing holes for a short rib. The second end part has the first and the second clamp arm which are disposed opposite to each other. The first and the second clamp arm have a first and a second boss respectively and the first and the second boss are disposed opposite to each other. Preferably, the fixing holes for a short rib of which the number is not less than two are disposed at intervals along the length of the insertion portion for a short rib. The first and the second clamp arm are both in curved or corner shape. The middle disk of sunshade umbrellas is composed of a first and a second part. The first part comprises a first and a second end which are connected with each other and the second end has the first clamp arm. The second part comprises a third and a fourth end and the fourth end has the second clamp arm. The first and the third end contact with each other to form the insertion portion for a short rib. The present invention is ingeniously and uniquely designed, concise in structure, simple to assemble, artistic in appearance and is appropriate to be promoted on a large scale.

## Description

### Field of Technology

The present invention relates to the technical field of umbrellas, in particular to the technical field of sunshade umbrellas, and more particularly to a middle disk of sunshade umbrellas, which is used to connect a short rib with a long rib so that there is an angle between the long rib and the short rib when the umbrella is folded and dead angle is avoided.

### Description of Related Arts

At present, sunshade umbrellas can already be seen everywhere. When an umbrella needs to be unfolded, the shank pulls the umbrella rope or pushes the slider upwards. If there is not a certain angle between the junction of the long rib and the short rib, they will be stuck at the folded status. The long rib and the short rib cannot be unfolded until they are opened to a certain angle. In order to avoid the dead angle of the ribs, its short ribs are connected with long ribs by means of middle disks. However the existing middle disks on the market are mainly connected with long ribs by means of bolts, rivets or blind rivets. The process is increased and the appearance is affected.

For example, the patent ZL03230857.4 provides a middle disk, in which the middle disk is fixed to a long rib by blind rivets and is fixed to a short rib by means of a tube plug and blind rivets. A stop dog is fixed to the short rib by blind rivets, and the stop dog is disposed at which the middle disk is connected in order to avoid the dead angle of the ribs. Therefore, the structure being complicated, and additionally, there being many blind rivets cause the assembly process to become complicated.

Therefore, in order to solve the existing aforementioned problems and the defects, a middle disk of sunshade umbrellas of which the structure is concise, the assembly is simple and the appearance is artistic needs to be provided.

### Summary of the Invention

The object of the present invention is to overcome the drawbacks of aforementioned existing technology, and to provide a middle disk of sunshade umbrellas. The middle disk of sunshade umbrellas is ingeniously and uniquely designed, concise in structure, concise in structure, simple to assemble, artistic in appearance and is appropriate to be promoted on a large scale.

In order to achieve the aforementioned objects, the middle disk of sunshade umbrellas wherein the said middle disk of sunshade umbrellas comprises a first end part and a second end part which are connected with each other. The said first end part is an insertion portion for a short rib and the said insertion portion for a short rib is provided with fixing holes for a short rib. The said second end part has a first clamp arm and a second clamp arm which are disposed opposite to each other. The said first clamp arm has a first boss and the said second clamp arm has a second boss. The said first boss and the said second boss are disposed opposite to each other.

Preferably, the number of the fixing holes for a short rib is not less than two.

More preferably, said fixing holes for a short rib are disposed at intervals along the length of the said insertion portion for a short rib.

Preferably, said first clamp arm and said second clamp arm are both in curved or corner shape.

Preferably, said middle disk of sunshade umbrellas is composed of a first part and a second part. The said first part comprises a first end and a second end which are connected with each other and the said second end has the said first clamp arm. The said second part comprises a third end and a fourth end which are connected with each other and the said fourth end has the said second clamp arm. The said first end and the said third end contact with each other to form the said insertion portion for a short rib.

More preferably, said first end has a first groove, and said third end has a second groove. The said first groove and the said second groove are disposed opposite to each other to form the said fixing holes for a short rib.

More preferably, said first part and said second part are fastened or clamped to each other to achieve the assembly.

The present invention has the advantage that: the middle disk of the sunshade umbrellas comprises a first end part and a second end part which are connected with each other, and the first end part is an insertion portion fort a short rib; the said insertion portion for a short rib is provided with fixing holes for a short rib; said second end part has a first clamp arm and a second clamp arm which disposed opposite to each other; the said first clamp arm has a first boss and said second clamp arm has a second boss; said first boss and said second boss are disposed opposite to each other, so that the long rib is connected by means of the first boss and the second boss; the insertion portion for a short rib is inserted into the short rib and is fixed by means of blind rivets; it is ingeniously designed, concise in structure, concise in structure, simple to assemble, artistic in appearance, and is appropriate to be promoted on a large scale.

### Brief Description of the Drawings

Fig. 1 is an exploded perspective view of one embodiment of the present invention.
Fig. 2 is the partial perspective assembly view of the embodiment illustrated in Fig. 1 connecting with a short rib and a long rib.
Fig. 3 is the partial perspective view of the embodiment illustrated in Fig. 1 connecting with a short rib and a long rib.

### Detailed Description of the Preferred Embodiment

In order to understand the technical content of the present invention more clearly, the embodiment is exemplified hereinafter to explain in details. It is supposed to be understood that the embodiment is intended to illustrate the present invention and is not intended to limit the present invention.

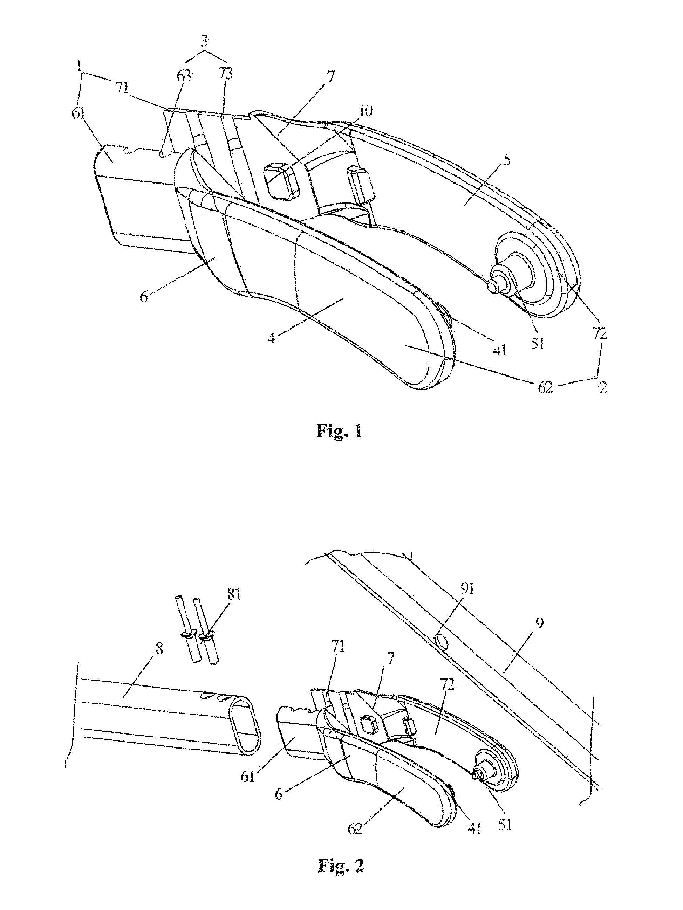

Please refer to Fig. 1, the middle disk of sunshade umbrellas of the present invention comprises a first end part 1 and a second end part 2 which are connected with each other. The said first end part 1 is an insertion portion for a short rib and the said insertion portion for a short rib is provided with fixing holes for a short rib 3. The said second end part 2 has a first clamp arm 4 and a second clamp arm 5 which are disposed opposite to each other. The said first clamp arm 4 has a first boss 41 and the said second clamp arm 5 has a second boss 51. The said first boss 41 and the said second boss 51 are disposed opposite to each other.

In order to be connected securely, preferably, the number of said fixing holes for a short rib 3 is not less than two. Please refer to Fig. 1, in the embodiment of the present invention, said fixing holes for a short rib 3 of which the number is two are disposed at intervals along the length of the insertion portion for a short rib.

The said first clamp arm and the said second clamp arm can be of any shapes, preferably, the said first clamp arm and the said second clamp arm are both in curved or corner shape. Please refer to Fig. 1, in the embodiment of the present invention, the said first clamp arm and the said second clamp arm are both in curved shape.

In order to be processed easily, preferably, said middle disk of sunshade umbrellas is composed of a first part 6 and a second part 7. The said first part 6 comprises a first end 61 and a second end 62 which are connected with each other and the said second end 62 has the said first clamp arm 4. The said second part 7 comprises a third end 71 and a fourth end 72 which are connected with each other and the said fourth end 72 has the said second clamp arm 5. The said first end 61 and the said third end 71 contact with each other to form the said insertion portion for a short rib. That is to say, equivalently, the said first end 61 and the said third end 71 combine into the first end part 1, and the said second end 62 and the said fourth end 72 combine into the second end part 2.

Please refer to Fig. 1, in the embodiment of the present invention, said first end 61 has a first groove 63 and the said third end 71 has a second groove 73. The said first groove 63 and the said second groove 73 are disposed opposite to each other to form the said fixing holes for a short rib 3.

The said first part 6 and the said second part 7 can be connected by appropriate means, and more preferably, the said first part 6 and the said second part 7 are fastened or clamped to each other to achieve the assembly. In the embodiment of the present invention, the said first part 6 and the said second part 7 are clamped to each other to achieve the assembly, wherein the fixing block 10 is illustrated in Fig. 1.

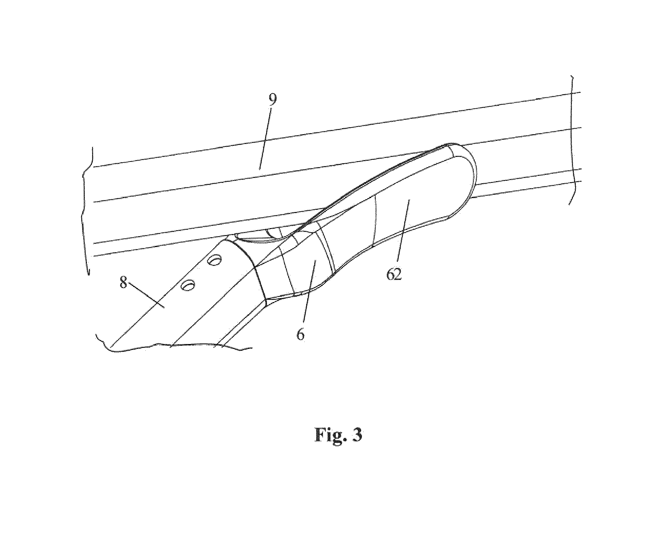

Please refer to Fig. 2, when the present invention is employed to connect a short rib 8 with a long rib 9, the first boss 41 and the second boss 51 are inserted respectively into the hole 91 of a specific part of the long rib 9. The long rib 9 is located between the first clamp arm 4 and the second clamp arm 5, and then the insertion portion for a short rib is inserted into the short rib 8 by two blind rivets 81 to be fixed in the short rib 8. The assembly is done, please refer to Fig. 3.

Thus, the long rib 9 swings relative to the short rib 8 around the axis of the first boss 41 and the second boss 51 to achieve the function.

To sum up, the middle disk of sunshade umbrellas is ingeniously and uniquely designed, concise in structure, concise in structure, simple to assemble, artistic in appearance and is appropriate to be promoted on a large scale.

In this specification, the present invention has been described with reference to specific embodiments. However, it is still obvious modifications and variations may be made without departing from the spirit and scope of the invention. Accordingly, the specification and drawings are to be regarded as illustrative rather than restrictive.

## Claims

1. A middle disk of sunshade umbrellas, wherein said middle disk of sunshade umbrellas comprising a first end part and a second end part which are connected with each other, said first end part being an insertion portion for a short rib, said insertion portion for a short rib being provided with fixing holes for a short rib, said second end part having a first clamp arm and a second clamp arm which are disposed opposite to each other, said first clamp arm having a first boss, said second clamp arm having a second boss, said first boss and said second boss being disposed opposite to each other, said middle disk of sunshade umbrellas being composed of a first part and a second part, said first part comprising a first end and a second end which are connected with each other, said second end having the said first clamp arm, said second part comprising a third end and a fourth end which are connected with each other, said fourth end having the said second clamp arm, and the said first end and the said third end contacting with each other to form the said insertion portion for a short rib.

2. The middle disk of sunshade umbrellas according to claim 1, wherein the number of the said fixing holes for a short rib is not less than two.

3. The middle disk of sunshade umbrellas according to claim 2, wherein said fixing holes for a short rib are disposed at intervals along the length of said insertion portion for a short rib.

4. The middle disk of sunshade umbrellas according to claim 1, wherein said first clamp arm and said second clamp arm are both in curved or corner shape.

5. The middle disk of sunshade umbrellas according to claim 1, wherein the long rib is located between the first clamp arm and the second clamp arm, and the first boss and the second boss are inserted respectively into the hole of a specific part of the long rib.

6. The middle disk of sunshade umbrellas according to claim 1, wherein said first end has a first groove, and said third end has a second groove; said first groove and said second groove are disposed opposite to each other to form said fixing holes for a short rib.

7. The middle disk of sunshade umbrellas according to claim 1, wherein said first part and said second part are fastened or clamped to each other to achieve the assembly.
